# EUROPEAN PATENT APPLICATION

(11) **EP 3 736 229 A1**
(43) Date of publication of application: **11.11.2020**
(21) Application number: 18898743.2
(22) Date of filing: 28.12.2018
(51) Int. Cl.: B65D 83/06, G01F 13/00

(54) **MEASUREMENT CONTAINER**

(30) Priority: 05.01.2018 JP 2018000814
(71) Applicant: Morinaga Milk Industry Co., Ltd., Minato-ku Tokyo 108-8384 (JP)
(72) Inventor: HAYAKAWA Yuki, Zama-shi, Kanagawa 252-8583 (JP); FUKUMOTO Yasuhiro, Zama-shi, Kanagawa 252-8583 (JP); KANEHARA Hirokatsu, Zama-shi, Kanagawa 252-8583 (JP); KAWAKAMI Satomi, Zama-shi, Kanagawa 252-8583 (JP); KAMEDA Katsumi, Tokyo 162-8001 (JP); FUNAJIMA Ryo, Tokyo 162-8001 (JP)
(74) Representative: Vossius & Partner Patentanwälte Rechtsanwälte mbB
(86) International application number: PCT/JP2018/048443
(87) International publication number: WO 2019/135402

(57) **Abstract**

The measurement container (10) includes a container body (11) and a measurement mechanism (20) attached to the container body. The measurement mechanism includes a bottom member (30), an intermediate member (40), and a top member (50). The bottom member includes a first dispensing opening (31), an inclined portion (32) extending expansively from the first dispensing opening, and a second measurement portion (33) located around the inclined portion. The intermediate member includes a protruding portion (41) protruding toward the first dispensing opening side, a first measurement portion (42) located around the protruding portion and disposed with a gap defined between the first measurement portion and the inclined portion, and a peripheral portion (43) located around the first measurement portion and in which a peripheral opening portion (46) is formed. A second dispensing opening (51) is formed at the top member.

## Description

### Technical Field

The present invention relates to measurement containers and, in particular, relates to a measurement container that is suitably used for containing a thickener or powdered milk. The present application claims priority from Japanese Patent Application No. 2018-000814 filed on January 5, 2018, the entire contents of which are hereby incorporated by reference.

### Background Art

In related art, there has been known a constant-amount discharge container that can contain particulate matter, such as a thickener or powdered milk, and can repeatedly dispense a constant amount of the contained particulate matter. With such a constant-amount discharge container, the particulate matter in a container body is temporarily received in a measurement portion by inverting the constant-amount discharge container, and the constant amount of the particulate matter is measured. Thereafter, by erecting the constant-amount discharge container, the particulate matter in the measurement portion is moved to a holding portion between the container body and a cap. When the constant-amount discharge container is inverted again, the particulate matter in the holding portion is dispensed from the cap (see, for example, patent document 1 and patent document 2).

### Citation List

### Patent Documents

Patent document 1: Japanese Unexamined Patent Application, First Publication No.2006-117262.
Patent document 2: Japanese Unexamined Patent Application, First Publication No.H9-301404.

### Summary of the Invention

### Problems to be Solved by the Invention

However, with the constant-amount discharge container of the related art, the constant amount of the particulate matter is measured by inverting the constant-amount discharge container, and thereafter, when the constant-amount discharge container is erected, the measured constant amount of the particulate matter may flow back into the container body from the measurement portion in some cases. In such a case, there is a possibility of causing a deviation in the amount of the particulate matter that has been dispensed after measuring in the measurement portion.

In consideration of the above-mentioned problems, it is an object of the invention to provide a measurement container that prevents the contents from flowing back into a container body from a measurement portion and measures the contents in the measurement portion accurately.

### Solution to Problem

A measurement container according to a first aspect of the invention includes a container body configured to be capable of filling contents, and a measurement mechanism attached to the container body. The measurement mechanism includes a bottom member, an intermediate member disposed to cover the bottom member, and a top member disposed to cover the intermediate member. The bottom member includes a first dispensing opening, an inclined portion extending expansively from the first dispensing opening, and a second measurement portion located around the inclined portion. The intermediate member includes a protruding portion protruding toward the first dispensing opening side, a first measurement portion located around the protruding portion and disposed with a gap defined between the first measurement portion and the inclined portion, and a peripheral portion located around the first measurement portion and including a peripheral opening portion. A second dispensing opening is formed in the top member includes a second dispensing opening.

According to a second aspect of the invention, in the measurement container according to the first aspect, the protruding portion may include an apex portion and a protruding inclined portion extending expansively from the apex portion.

According to a third aspect of the invention, in the measurement container according to the first or second aspect, the peripheral portion of the intermediate member may include a plurality of support portions extending radially, and the peripheral opening portion may be formed between a pair of the support portions.

According to a third aspect of the invention, in the measurement container according to any one of the first to third aspects, the second measurement portion of the bottom member may include an inclined bottom surface gradually inclined in a direction away from the intermediate member from an inside to an outside.

### Advantageous Effects of the Invention

According to the invention, a backflow of the contents into the container body from the first measurement portion is suppressed so that a measurement of the contents at the first measurement portion is accurately performed.

### Brief Description of the Drawings

Fig. 1 is a perspective view of a measurement container according to the embodiment.
Fig. 2 is a front view of the measurement container according to the embodiment.
Fig. 3 is a vertical cross-sectional view of the measurement container according to the embodiment, taken along the line III-III in Fig. 2.
Fig. 4 is a perspective view of the measurement container according to the embodiment as viewed from a vertical cross section.
Fig. 5A is a partial, vertical cross-sectional view showing a method of using the measurement container according to the embodiment.
Fig. 5B is a partial, vertical cross-sectional view showing the method of using the measurement container according to the embodiment.
Fig. 5C is a partial, vertical cross-sectional view showing the method of using the measurement container according to the embodiment.
Fig. 6 is a vertical cross-sectional view of a measurement container of a comparative example.

### Description of Embodiments

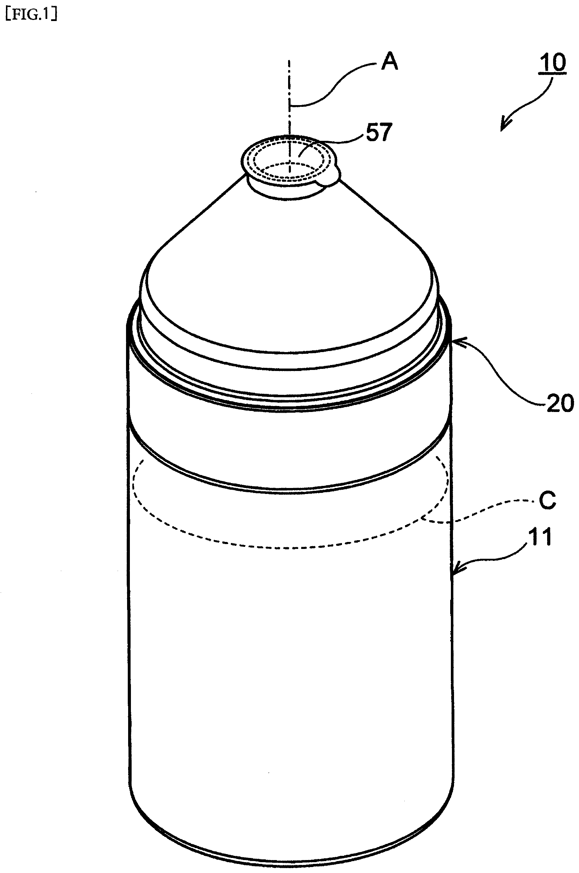

One embodiment of a measurement container according to the invention will be described below with reference to Fig. 1 to Fig. 5. Fig. 1 to Fig. 5 are diagrams showing the measurement container according to the one embodiment of the invention.

In the description, "upper" and "lower" respectively refer to an upper side and a lower side when a measurement container 10 is erected (see Fig. 1 to Fig. 4). Being "erected" refers to a state in which a container body 11 of the measurement container 10 is disposed on the lower side of a measurement mechanism 20 in a vertical direction while a center axis A of the container body 11 is parallel to a vertical axis. Being "inverted" refers to a state in which the measurement mechanism 20 of the measurement container 10 is disposed on the lower side of the container body 11 in the vertical direction while the center axis A of the container body 11 is parallel to the vertical axis.

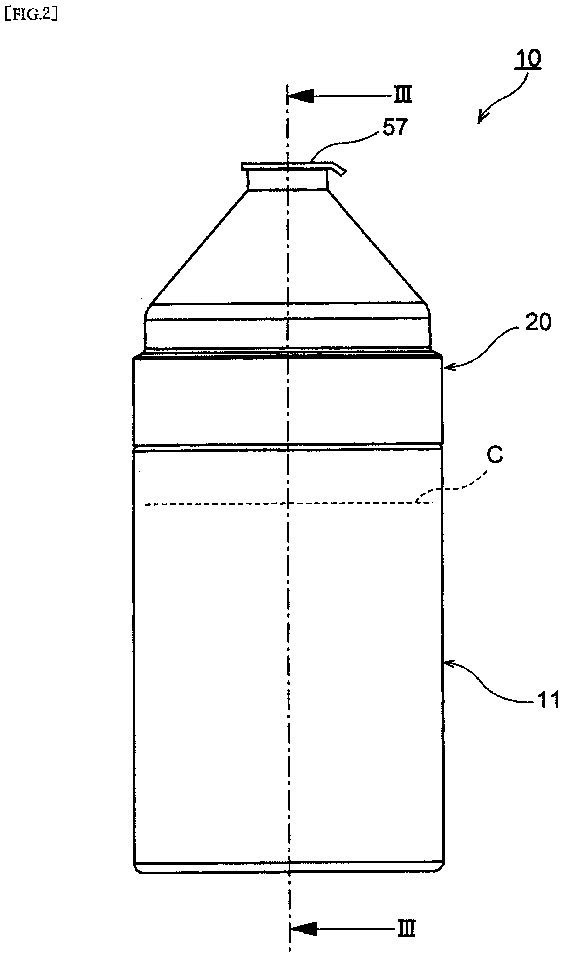

The measurement container 10 according to the embodiment suitably stores a thickener or powdered milk as contents C and is configured to measure and dispense the contents C. As shown in Fig. 1 and Fig. 2, the measurement container 10 according to the embodiment has a bottomed, substantially hollow-cylindrical shape as a whole. The measurement container 10 includes the container body 11 configured to be filled with the contents C and the measurement mechanism 20 attached to the container body 11.

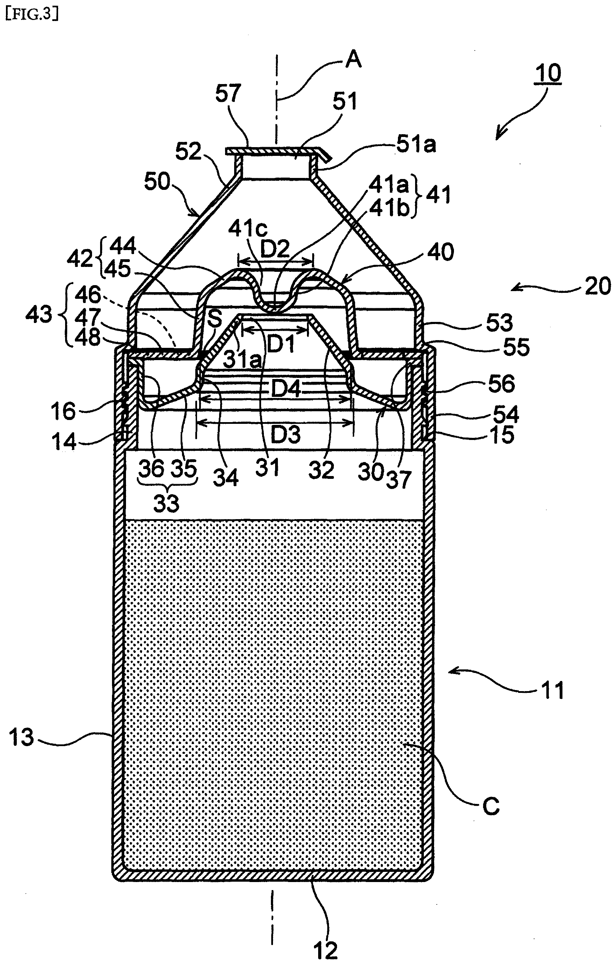

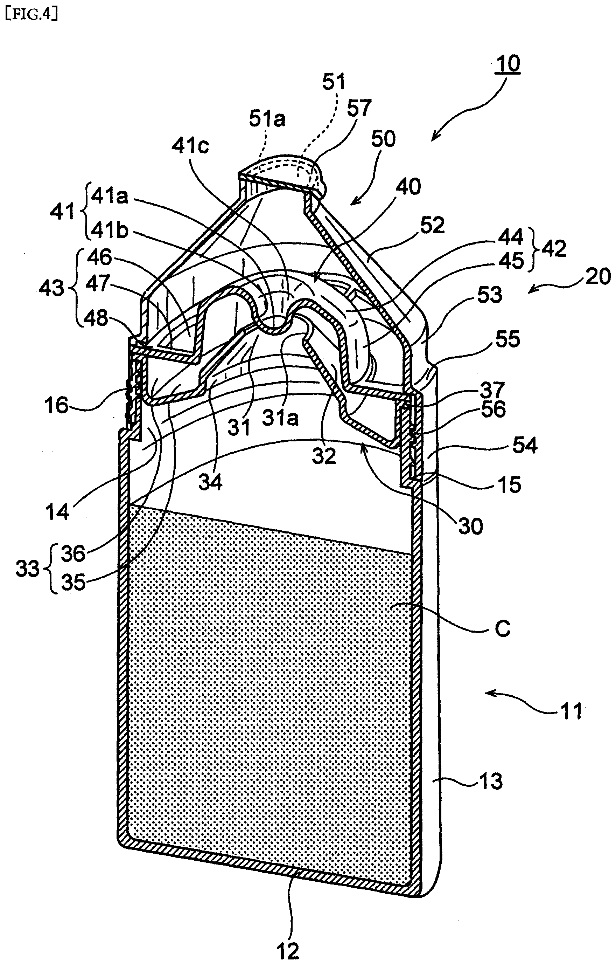

As shown in Fig. 3 and Fig. 4, the container body 11 includes a bottom surface 12, a first container side surface 13, and a second container side surface 14. The bottom surface 12 has a circular shape in plan view. The first container side surface 13 has a hollow cylindrical shape extending upward from the bottom surface 12. The second container side surface 14 has a hollow cylindrical shape extending upward from the first container side surface 13. A diameter of the first container side surface 13 is larger than a diameter of the second container side surface 14. A container side-surface stepped portion 15 is formed between the first container side surface 13 and the second container side surface 14. An external thread portion 16 to be screwed to an internal thread portion 56 (described later) of a top member 50 is formed on an outer-peripheral surface of the second container side surface 14.

The thickener or powdered milk as the contents C is stored inside of the container body 11. Here, the thickener means particulate food having a property to increase viscosity of a liquid or fluid when the thickener is added to the liquid or fluid. Such a thickener is used mainly to thicken the liquid or fluid. As an example, an aspect may be given in which when elderly people and such others having difficulty in chewing and swallowing take liquid food of low viscosity, such as soup and *miso* soup, the thickener is added to the liquid food of low viscosity to increase the viscosity of the liquid food and make it easier for the elderly people and such others to chew and swallow the liquid food. As such an aspect, typical examples include food for dysphagia people, food for adjusting thickness, and powder for adjusting thickness.

It should be noted that a scope of the "liquid or fluid" includes a state that solid material is processed and changed into a liquid or fluid state. A scope of "increasing viscosity" includes making the liquid or fluid semisolid or solid. For example, there is a solidification supplement powder for elderly people or such others having difficulty in chewing solid food. The solidification supplement powder is mixed with a solid food by a blender to make all of them to fluid so that all of them finally become a semisolid or gel state. The solidification supplement powder is also included a scope of the thickener.

The "powdered milk" means "milk", "milk products" or "food using milk or milk products as principal ingredients" defined in Ministerial Ordinance on Milk and Milk Products Concerning Compositional Standards, etc. (Japan Ministry of Health and Welfare Ordinance No. 52, December 27, 1951) and in a particulate state. It should be noted that a scope of the powdered milk further includes instant creaming powder (powder to be added to coffee, tea, hot chocolate, etc. to make its flavor creamy) other than the above-mentioned substances.

As examples of the powdered milk, powder of cow' s milk, fermented milk, cheese, etc. that are in particulate states, whole milk powder, skimmed milk powder, cream powder, whey powder, protein concentrated whey powder, buttermilk powder, sweetened milk powder, formulated milk powder, etc. may be given. As examples of the instant creaming powder, various kinds of creaming powder to be added to coffee, tea, hot chocolate, etc. may be given.

Preferably, a particle diameter of the thickener or powdered milk is, for example, 2000 µm or less. Preferably, a mass of the thickener or powdered milk filled in the container body 11 is, for example, 5 g or larger and 300 g or less.

Next, using Fig. 3 and Fig. 4, the measurement mechanism 20 will be described.

As shown in Fig. 3 and Fig. 4, the measurement mechanism 20 in the embodiment includes three members including a bottom member (bottom lid) 30, an intermediate member (intermediate lid) 40, and the top member (top lid) 50. The intermediate member 40 is disposed on the bottom member 30. The top member 50 is disposed on the intermediate member 40. The bottom member 30 is arranged to cover an opening of the container body 11. The intermediate member 40 is arranged to cover the bottom member 30. The top member 50 is arranged to cover the intermediate member 40. These bottom member 30, intermediate member 40, and top member 50 are manufactured as separate members and thereafter assembled integrally when attached to the container body 11.

The bottom member 30 includes a first dispensing opening 31, an inclined portion 32, and a second measurement portion 33. The inclined portion 32 is inclined while extending expansively from the first dispensing opening 31. The second measurement portion 33 is located around the inclined portion 32.

The first dispensing opening 31 is located substantially in the center of the bottom member 30 in a radial direction and at an apex of the mountain-shaped inclined portion 32. The first dispensing opening 31 is an opening where the contents C pass when the contents C are dispensed from the container body 11 to a first measurement portion 42 (described later) of the intermediate member 40. The first dispensing opening 31 has a substantially circular shape in plan view. An opening edge portion 31a of a substantially annular shape is formed on a periphery of the first dispensing opening 31. The opening edge portion 31a extends inside of the first measurement portion 42 of the intermediate member 40. The opening edge portion 31a is located on an upper side of a peripheral portion 43 (described later) of the intermediate member 40 (on a side opposite to the container body 11 side).

The inclined portion 32 is inclined while extending expansively as described above, and is formed in such a manner that a diameter of the inclined portion 32 gradually increases downward (toward the container body 11 side) from the first dispensing opening 31. The inclined portion 32 is formed over a circumferentially entire area of the first dispensing opening 31 and inclined like a side surface of a frustum as a whole. The inclined portion 32 has a tapered cross-sectional shape in the vertical direction. The inclined portion 32 plays a role of making the contents C that has been measured by the first measurement portion 42 of the intermediate member 40 and stored in the first measurement portion 42 flow into the second measurement portion 33 side. It should be noted that although the inclined portion 32 extends in a substantially straight line in cross-sectional view as shown in Fig. 3, the inclined portion 32 should not be construed in a limiting sense, and that the inclined portion 32 may be curved in cross-sectional view.

A vertical wall 34 is formed between the inclined portion 32 and the second measurement portion 33. The vertical wall 34 has a substantially hollow-cylindrical shape and droops from a lower end of the inclined portion 32. It should be noted that the lower end of the inclined portion 32 may be directly coupled to the second measurement portion 33 without forming the vertical wall 34.

The second measurement portion 33 is formed around the inclined portion 32 and the vertical wall 34. The second measurement portion 33 plays a role as a storing portion where the contents C that has been measured in the first measurement portion 42 of the intermediate member 40 are stored before being dispensed from a second dispensing opening 51 (described later) of the top member 50. The second measurement portion 33 includes an inclined bottom surface 35 coupled to a lower end of the vertical wall 34 and an outer wall surface 36 coupled to an outer edge of the inclined bottom surface 35.

The inclined bottom surface 35 is gradually inclined downward (in a direction away from the intermediate member 40) from a radially inner side (the inclined portion 32 side) to a radially outer side (the outer wall surface 36 side). The inclined bottom surface 35 is formed over a circumferentially entire area of the vertical wall 34 and inclined like a side surface of a frustum as a whole. The inclined bottom surface 35 has a tapered cross-sectional shape in the vertical direction. Since an inclined bottom surface 35 is provided, the contents C that has flowed inside from the first measurement portion 42 of the intermediate member 40 is more likely to be stored on the radially outer side in the second measurement portion 33. With this configuration, when the measurement container 10 is inverted, a return of the contents C is prevented from returning to the first measurement portion 42. It should be noted that although the inclined bottom surface 35 extends in a substantially straight line in cross-sectional view in the vertical direction, the inclined bottom surface 35 should not be construed in a limiting sense, and that the inclined bottom surface 35 may be curved in cross-sectional view.

The outer wall surface 36 extends upward from an outer edge of the inclined bottom surface 35 and has a substantially hollow-cylindrical shape as a whole. An upper end of the outer wall surface 36 is located on an upper side of the lower end of the inclined portion 32 (on the side opposite to the container body 11 side). A peripheral flange 37 is coupled to the upper end of the outer wall surface 36. The peripheral flange 37 has a substantially annular shape in plan view and is mounted on the second container side surface 14 of the container body 11. The peripheral flange 37 is held between an outer-peripheral ring 48 (described later) of the intermediate member 40 and the second container side surface 14 of the container body 11 so as to secure the bottom member 30 between the intermediate member 40 and the container body 11.

The intermediate member 40 includes a protruding portion 41, the first measurement portion 42, and the peripheral portion 43. The first measurement portion 42 is located around the protruding portion 41. The peripheral portion 42 is located around the first measurement portion.

The protruding portion 41 is located substantially in the center of the intermediate member 40 in the radial direction and protrudes from an upper side (a side opposite to the container body 11 side) toward the first dispensing opening 31 side of the bottom member 30. The protruding portion 41 includes an apex portion 41a located in the center and a protruding inclined portion 41b inclined while extending expansively from the apex portion 41a. A recessed portion 41c is formed on the top member 50 side of the protruding portion 41. The apex portion 41a is located at the lowest (on the container body 11 side) of the protruding portion 41. The protruding inclined portion 41b is formed and inclined in such a manner that a diameter of the protruding inclined portion 41b gradually increases upward (toward the side opposite to the container body 11 side) from the apex portion 41a. The protruding inclined portion 41b has a curved shape in cross-sectional view in the vertical direction. Since the protruding inclined portion 41b is inclined around the apex portion 41a in this manner, the contents C are less likely to remain on the protruding portion 41. The apex portion 41a is located on the upper side of the first dispensing opening 31 (on the side opposite to the container body 11 side).

The protruding portion 41 is provided to prevent the contents C that has been temporarily contained in the first measurement portion 42 from returning to the container body 11 side. The protruding portion 41 has a substantially circular shape in plan view and a substantially rounded mountain-shape in cross-sectional view in the vertical direction. In plan view, the protruding portion 41 is larger than the first dispensing opening 31. That is, a diameter (width) D2 of the protruding portion 41 is larger than a diameter (width) D1 of the first dispensing opening (D2 > D1). With this configuration, the contents C has been contained in the first measurement portion 42 is more effectively prevented from flowing back to the container body 11 side. Here, the diameter (width) D2 of the protruding portion 41 refers to a diameter (width) of an outer periphery of the protruding inclined portion 41b of the protruding portion 41.

The first measurement portion 42 is formed around the first dispensing opening 31 over an entire circumference. The first measurement portion 42 is a portion to measure the contents C that has flowed inside from the container body 11 when the measurement container 10 is inverted, and to temporarily hold the measured contents C. The first measurement portion 42 includes an inclined top surface 44 and a circumferential wall surface 45. The inclined top surface 44 is coupled to an upper end of the protruding portion 41. The circumferential wall surface 45 is coupled to an outer edge of the inclined top surface 44.

The inclined top surface 44 is gradually inclined downward (toward the container body 11 side) from a radially inner side (the protruding portion 41 side) to a radially outer side (the circumferential wall surface 45 side) . The inclined top surface 44 is formed over a circumferentially entire area of the protruding portion 41 and has an annular shape in plan view and a tapered shape in cross-sectional view in the vertical direction. Such an inclined top surface 44 is provided to prevent the contents C from returning to the container body 11 through the first dispensing opening 31 when the inverted measurement container 10 is erected. In the embodiment, the inclined top surface 44 is curved in cross-sectional view in the vertical direction. A shape of the inclined top surface is not limited to this but may be formed in a straight line in cross-sectional view. It should be noted that the outer edge of the inclined top surface 44 is located on the upper side of the first dispensing opening 31 (on the side opposite to the container body 11 side).

The circumferential wall surface 45 extends downward from the outer edge of the inclined top surface 44. The circumferential wall surface 45 is gradually inclined downward (toward the container body 11 side) from a radially inner side (the inclined top surface 44 side) to a radially outer side (the peripheral portion 43 side). A lower end of the circumferential wall surface 45 is located on an upper side of the lower end of the inclined portion 32 of the bottom member 30 (on the side opposite to the container body 11 side) . The first measurement portion 42 is arranged in such a manner that a gap S is defined between the first measurement portion 42 and the inclined portion 32 of the bottom member 30.

An outer diameter (width) D3 of the inclined portion 32 of the bottom member 30 is larger than an inner diameter (width) D4 of the first measurement portion 42 of the intermediate member 40 (D3 > D4). With this configuration, the contents C that has been contained in the second measurement portion 33 is more effectively prevented from flowing back to the first measurement portion 42 side. Here, the outer diameter (width) D3 of the inclined portion 32 refers to a diameter (width) of an outer periphery of the inclined portion 32, and the inner diameter (width) D4 of the first measurement portion 42 refers to a diameter (width) of an inner periphery of the circumferential wall surface 45.

The peripheral portion 43 is disposed on a periphery of the first measurement portion 42 and has an annular shape as a whole. The peripheral portion 43 includes a plurality of (four in the embodiment) peripheral opening portions 46 and a plurality of (four in the embodiment) support portions 47. The peripheral opening portions 46 each have a fan shape in plan view and are disposed at intervals from each other in the circumferential direction. The peripheral opening portions 46 are openings where the contents C contained in the second measurement portion 33 of the bottom member 30 passes while moving toward the second dispensing opening 51 side of the top member 50 when the measurement container 10 is inverted.

As shown in Fig. 4, the support portions 47 each have a long and narrow bar shape and extend from the first measurement portion 42 radially outward in a horizontal direction. In this case, the support portions 47 are evenly spaced 90 degree apart in plan view. Each of the peripheral opening portions 46 is interposed between a pair of the support portions 47. Furthermore, the outer-peripheral ring 48 having an annular shape in plan view is disposed on a radially outer side of the peripheral opening portions 46 and the support portions 47. The outer-peripheral ring 48 is held between a top-member stepped portion 55 (described later) of the top member 50 and the peripheral flange 37 of the bottom member 30 so as to secure the intermediate member 40 between the top member 50 and the bottom member 30.

The top member 50 includes the second dispensing opening 51, an inclined surface 52, a first top-member side surface 53, and a second top-member side surface 54. The inclined surface 52 is inclined while extending expansively around the second dispensing opening 51. The first top-member side surface 53 extends downward (toward the container body 11 side) from the inclined surface 52. The second top-member side surface 54 extends downward from the first top-member side surface 53.

The second dispensing opening 51 is located substantially in the center of the top member 50 in the radial direction. The second dispensing opening 51 is an opening where the contents C passes when the contents C is dispensed out of the measurement container 10. The second dispensing opening 51 has a substantially circular shape in plan view. An opening hollow-cylindrical portion 51a having a substantially hollow-cylindrical shape is formed on a periphery of the second dispensing opening 51. The opening hollow-cylindrical portion 51a is formed on an upper end of the inclined surface 52. It should be noted that the second dispensing opening 51 is hermetically sealed with a lid member 57.

The inclined surface 52 is inclined while extending expansively as described above in such a manner that a diameter of the inclined surface 52 gradually increases downward (toward the container body 11 side) from the second dispensing opening 51. The inclined surface 52 is formed over a circumferentially entire area of the opening hollow-cylindrical portion 51a and has a frustum side-surface shape as a whole and a tapered cross-sectional shape in the vertical direction. The inclined surface 52 plays a role of making the contents C, which is moved from the second measurement portion 33 of the bottom member 30 through the peripheral opening portions 46 of the intermediate member 40, easier to dispense from the second dispensing opening 51. It should be noted that although the inclined surface 52 according to the embodiment extends in a substantially straight line in cross-sectional view in the vertical direction, a shape of the inclined surface is not limited to this but may be curved in cross-sectional view.

The first top-member side surface 53 is formed on a lower end of the inclined surface 52. The first top-member side surface 53 has a substantially hollow-cylindrical shape and droops from the inclined surface 52. It should be noted that the first top-member side surface 53 is not an essential component. The lower end of the inclined surface 52 may be directly coupled to the second top-member side surface 54 without providing the first top-member side surface 53.

The second top-member side surface 54 is formed on a lower end of the first top-member side surface 53. The second top-member side surface 54 has a substantially hollow-cylindrical shape and droops from the first top-member side surface 53. A diameter of the second top-member side surface 54 is larger than a diameter of the first top-member side surface 53, and the top-member stepped portion 55 is formed between the first top-member side surface 53 and the second top-member side surface 54. The peripheral flange 37 of the bottom member 30 and the outer-peripheral ring 48 of the intermediate member 40 are held between the top-member stepped portion 55 and the second container side surface 14 of the container body 11. With this configuration, the top member 50 secures the bottom member 30 and the intermediate member 40 to the container body 11.

The internal thread portion 56 screwed to the external thread portion 16 of the container body 11 is formed on an inner-peripheral surface of the second top-member side surface 54. With the internal thread portion 56 of the top member 50 being screwed to the external thread portion 16 of the container body 11, the top member 50 is detachably attached to the container body 11. With the top member 50 being attached to the container body 11, the intermediate member 40 and the bottom member 30 are secured between the top member 50 and the container body 11. It should be noted that an aspect of securing the top member and the container body is not limited to this. The top member may be attached to the container body in a stopper-like manner.

As materials of the container body 11, the bottom member 30, the intermediate member 40, and the top member 50 described above, for example, synthetic resin material, such as polypropylene and ABS resin, may be employed. The materials of the container body 11, the bottom member 30, the intermediate member 40, and the top member 50 may be the same or different from each other. As examples of a method of manufacturing the container body 11, the bottom member 30, the intermediate member 40, and the top member 50, an injection molding method and a compression molding method may be given.

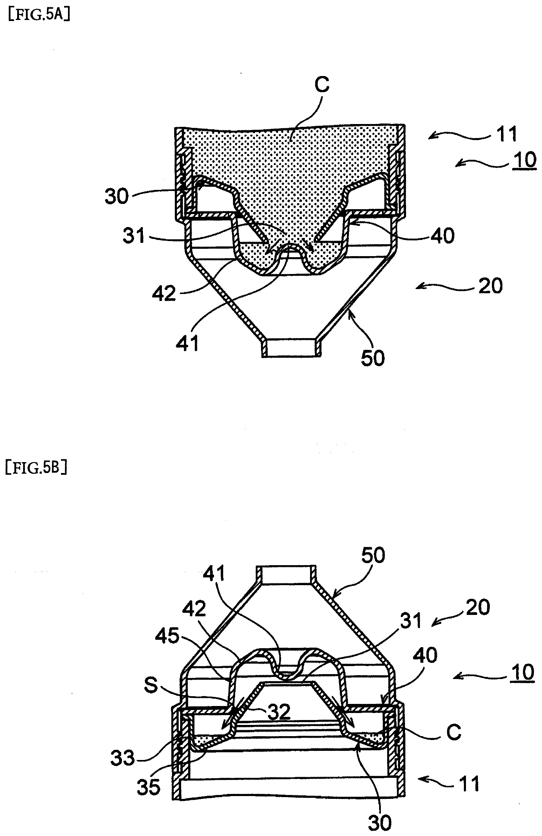

Next, functions in dispensing a constant amount of the contents C using the measurement container 10 according to this embodiment will be described with reference to Fig. 5A to Fig. 5C.

Firstly, as the contents C, a thickener or powdered milk is filled in the container body 11. The top member 50 is first rotated about the container body 11 so as to separate the container body 11 and the measurement mechanism 20 from each other. Specifically, by rotating the top member 50 about the container body 11, the internal thread portion 56 of the top member 50 is unscrewed from the external thread portion 16 of the container body 11 so as to detach the top member 50 from the container body 11. At this time, the bottom member 30 and the intermediate member 40 are also detached from the container body 11.

Next, after filling the contents C in the container body 11 from the opening of the container body 11, the container body 11 and the measurement mechanism 20 are screwed to each other. Specifically, the bottom member 30 and the intermediate member 40 are placed on the container body 11, and the internal thread portion 56 of the top member 50 is screwed to the external thread portion 16 of the container body 11. Thus, the bottom member 30, the intermediate member 40, and the top member 50 are attached to the container body 11. Thereafter, the second dispensing opening 51 is hermetically sealed with the lid member 57 so as to store the contents in the measurement container 10.

Subsequently, the contents C in the measurement container 10 is dispensed. In this case, the lid member 57 is first detached from the second dispensing opening 51. Next, as shown in Fig. 5A, the measurement mechanism 20 is turned downward whereas the bottom surface 12 of the container body 11 is turned upward so as to turn the measurement container 10 into an inverted state. At this time, the contents C in the container body 11 falls down while passing through the first dispensing opening 31 of the bottom member 30, and flow into the first measurement portion 42 of the intermediate member 40. Thereafter, when a surface level of the contents C in the first measurement portion 42 rises and clogs the first dispensing opening 31, the contents C naturally stops falling. Therefore, an amount of the contents C that flows into the first measurement portion 42 is substantially constant each time.

Next, as shown in Fig. 5B, the measurement mechanism 20 is turned upward whereas the bottom surface 12 of the container body 11 is turned downward so as to turn the measurement container 10 into an erected state. At this time, the contents C filled in the first measurement portion 42 pass through the gap S between the inclined portion 32 and the circumferential wall surface 45 and move to the second measurement portion 33. The contents C that has reached an inside of the second measurement portion 33 is guided toward an outer periphery along the inclined bottom surface 35.

By the way, in the embodiment, the protruding portion 41 of the intermediate member 40 protrudes toward the first dispensing opening 31 side. With this configuration, when the measurement container 10 is erected, a backflow of the contents C to the first dispensing opening 31 side from the first measurement portion 42 is suppressed. Consequently, the contents C that has been temporarily contained in the first measurement portion 42 is prevented from returning into the container body 11 so that a measurement of the contents C at the first measurement portion 42 is accurately and steadily performed.

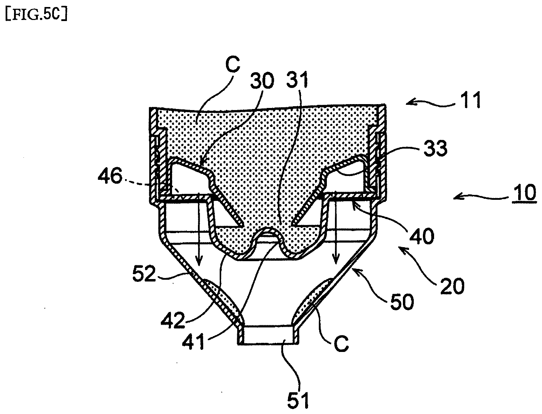

Subsequently, as shown in Fig. 5C, the measurement container 10 is inverted again. In this case, the contents C stored in the second measurement portion 33 pass through the peripheral opening portions 46 of the intermediate member 40, slide on the inclined surface 52, and are dispensed out of the second dispensing opening 51. At this time, the contents C in the container body 11 flow out of the first dispensing opening 31 but are accumulated in the first measurement portion 42. Therefore, the contents C accumulated in the first measurement portion 42 is not dispensed out of the first measurement portion 42.

According to the embodiment, the intermediate member 40 includes the protruding portion 41 that protrudes toward the first dispensing opening 31 side. With this configuration, when the measurement container 10 is erected from the inverted state to cause the contents C that has been measured in the first measurement portion 42 to move to the second measurement portion 33, the contents C in the first measurement portion 42 is prevented from flowing back to the first dispensing opening 31. Consequently, the contents C is accurately and steadily measured and dispensed.

According to this embodiment, the protruding portion 41 includes the protruding inclined portion 41b inclined while extending expansively from the apex portion 41a. Thus, when the measurement container 10 is erected from the inverted state, the contents C hardly remain on the protruding portion 41. Accordingly, a measurement errors of the contents C in the first measurement portion 42 is suppressed.

According to the embodiment, the peripheral portion 43 of the intermediate member 40 includes the plurality of support portions 47 extending radially outward, and the peripheral opening portions 46 are each formed between a pair of the support portions 47. In this case, the first measurement portion 42 is capable of being supported in the center of the intermediate member 40 using the support portions 47. The contents C in the second measurement portion 33 is capable of being moved toward the second dispensing opening 51 side through the peripheral opening portions 46.

According to the embodiment, the second measurement portion 33 of the bottom member 30 includes the inclined bottom surface 35 gradually inclined downward (in the direction away from the intermediate member 40) from the radially inner side to the radially outer side. Thus, the contents C contained in the second measurement portion 33 is capable of being stored on the radially outer side of the second measurement portion 33. Consequently, the contents C contained in the second measurement portion 33 is prevented from flowing back to the first measurement portion 42 side, thereby improving measurement accuracy of the contents C.

According to the embodiment, the thickener or powdered milk is used as the contents C filled in the container body 11 so that an accurate and constant amount of the thickener, for example, is capable of being dispensed from the measurement container 10. As a result, it is possible to obtain effects that liquid or fluid matter is made have appropriate viscosity; and the viscosity each time of use is hardly deviated. Since an accurate and constant amount of the powdered milk is capable of being dispensed from the measurement container 10, it is possible to obtain an effect that ingredient concentrations of the dissolved powdered milk each time of use is hardly deviated.

Next, an example of the measurement container according to the above-described embodiment will be described.

### (Example)

The measurement container 10 (example) shown in Fig. 1 to Fig. 4 was prepared.

### (Comparative Example)

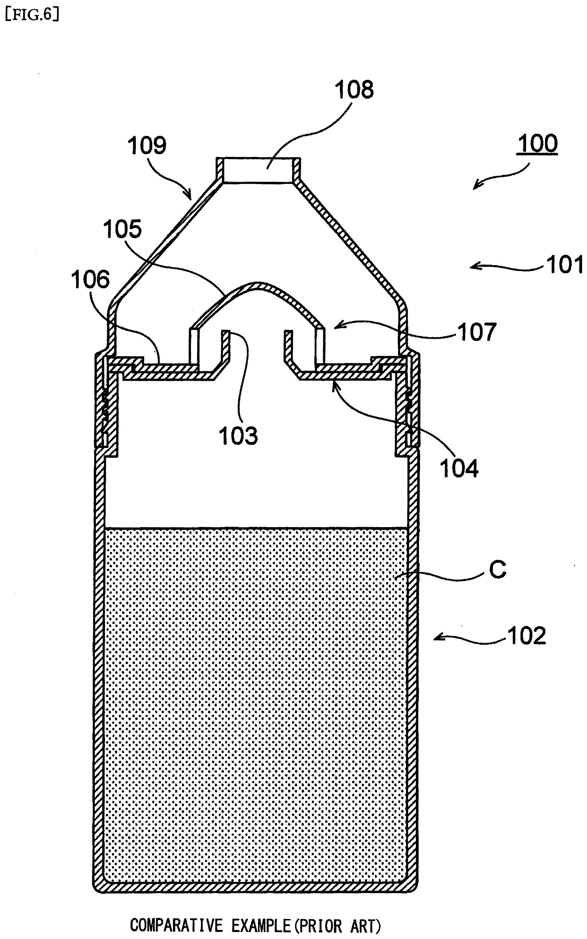

As a comparative example, a measurement container 100 on the market was prepared. As shown in Fig. 6, the measurement container 100 of the comparative example includes a measurement mechanism 101 and a container body 102 attached to the measurement mechanism 101. The measurement mechanism 101 includes a bottom member 104, an intermediate member 107, and a top member 109. The bottom member 104 includes a first dispensing opening 103. The intermediate member 107 is disposed to cover the bottom member 104. The intermediate member 107 includes a measurement portion 105 and a storing portion 106 located around the measurement portion 105. The top member 109 is disposed to cover the intermediate member 107 and includes a second dispensing opening 108.

Next, as the contents, 50 g of the same thickener was filled in each of the measurement container 10 of the example and the measurement container 100 of the comparative example. As the thickener, a product named *"Tsururinko* Quickly" (manufactured by CLINICO CO., LTD.) was used. Subsequently, a dispensing operation was performed with each of the measurement container 10 of the example and the measurement container 100 of the comparative example a plurality of times, and a dispensing amount of the contents was measured each time. Dispensing was repeated with each of the measurement containers until the thickener could be no longer dispensed steadily, and average values of the dispensing amounts were calculated. This result is shown in Table 1.

**[Table 1]**

| Dispensing amount (unit: g) | Example | Comparative example |
|---|---|---|
| Average value of dispensing amounts (unit: g) | 0.90 | 1.11 |
| Maximum value of dispensing amounts (unit: g) | 1.04 | 1.48 |
| Minimum value of dispensing amounts (unit: g) | 0.75 | 0.68 |
| Range of dispensing amounts (unit: g) | 0.29 | 0.80 |
| Remaining amount (unit: g) | 0.20 | 1.10 |
| Number of dispensing operations (unit: time) | 60 | 45 |

According to this result, the measurement container 10 of the example had a narrower range (maximum value - minimum value) of the dispensing amounts of the thickener than the measurement container 100 of the comparative example. It can be considered from the result that the measurement container 10 of the example suppressed deviation of the dispensing amounts of the thickener as compared with the measurement container 100 of the comparative example.

The invention is not limited to the above-described embodiment as it is and can be implemented by modifying components within the scope of the subject matter at an implementation stage. Moreover, various inventions can be made by appropriately combining a plurality of components disclosed in the embodiment. Some components can be eliminated from all the components shown in the embodiment.

### Industrial Applicability

The measurement container that prevents the contents from flowing back into the container body from the measurement portion and accurately measures the contents in the measurement portion is provided.

### Reference Signs List

- 10:: measurement container
- 11:: container body
- 20:: measurement mechanism
- 30:: bottom member
- 31:: first dispensing opening
- 32:: inclined portion
- 33:: second measurement portion
- 35:: inclined bottom surface
- 40:: intermediate member
- 41:: protruding portion
- 41a:: apex portion
- 41b:: protruding inclined portion
- 42:: first measurement portion
- 43:: peripheral portion
- 46:: peripheral opening portion
- 47:: support portion
- 50:: top member
- 51:: second dispensing opening
- 52:: inclined surface

## Claims

1. A measurement container comprising:
a container body configured to be capable of filling contents; and
a measurement mechanism attached to the container body,
the measurement mechanism comprising:
a bottom member;
an intermediate member disposed to cover the bottom member; and
a top member disposed to cover the intermediate member,
the bottom member comprising:
a first dispensing opening;
an inclined portion extending expansively from the first dispensing opening; and
a second measurement portion located around the inclined portion,
the intermediate member comprising:
a protruding portion protruding toward the first dispensing opening side;
a first measurement portion located around the protruding portion and disposed with a gap defined between the first measurement portion and the inclined portion; and
a peripheral portion located around the first measurement portion and in which a peripheral opening portion is formed,
wherein a second dispensing opening is formed at the top member.

2. The measurement container according to claim 1, wherein the protruding portion comprises an apex portion and a protruding inclined portion extending expansively from the apex portion.

3. The measurement container according to claim 1 or 2,
wherein the peripheral portion of the intermediate member comprises a plurality of support portions extending radially, and
wherein the peripheral opening portion is formed between a pair of the support portions.

4. The measurement container according to any one of claims 1 to 3, wherein the second measurement portion of the bottom member includes an inclined bottom surface gradually inclined in a direction away from the intermediate member from an inside to an outside.
